# EUROPEAN PATENT SPECIFICATION

(11) **EP 3 158 825 B1**
(45) Date of publication and mention of the grant of the patent: **13.06.2018**
(21) Application number: 15728676.6
(22) Date of filing: 14.05.2015
(51) Int. Cl.: H04N 21/23, H04N 21/2743

(54) **MEDIA PROCESSING SERVICES ON AN ACCESS NODE**
MEDIENVERARBEITUNGSDIENSTE AUF EINEM ZUGANGSKNOTEN
SERVICES DE TRAITEMENT DE CONTENU MULTIMÉDIA SUR UN NOEUD D'ACCÈS

(30) Priority: 17.06.2014 US 201414307390
(43) Date of publication of application: 26.04.2017
(73) Proprietor: Qualcomm Incorporated, San Diego, CA 92121-1714 (US)
(72) Inventor: CHAO, Hui, Cypress, Texas 92121-1714 (US); DAS, Saumitra Mohan, Cypress, Texas 92121-1714 (US); DA SILVA, Dilma Menezes, Cypress, Texas 92121-1714 (US); TEMBEY, Priyanka, Cypress, Texas 92121-1714 (US); BHAVSAR, Vrajesh Rajesh, Cypress, Texas 92121-1714 (US)
(74) Representative: Wegner, Hans
(86) International application number: PCT/US2015/030827
(87) International publication number: WO 2015/195239

(56) References cited:
- US-A1- 2007 047 657
- US-B1- 8 214 862

## Description

### RELATED APPLICATIONS

This application claims the priority benefit of U.S. Application Serial No 14/307,390 filed on June 17, 2014.

### BACKGROUND

Embodiments of the present subject matter generally relate to the field of network communication, and, more particularly, to access nodes that provides network access for one or more client devices.

In the field of network communication, an access node may be any device that provides access for one or more client devices to communicate via an upstream network. An example of an access node may include a wireless local area network (WLAN) access point (AP). Other examples of an access node may include a cellular base station, a relay station, a home base station (such as a femtocell, picocell, or other small cell appliance), or local area network switch.

One or more client devices may communicate via the access node to a server located in the upstream network. Examples of client devices may include mobile devices, cameras, accessories, tablets, laptops, personal computers, gaming devices, and the like. Client devices may be configured to upload content via an access node to a server in the upstream network. For example, media content, such as photos, videos, audio files, and the like, may be transmitted to the server. The client device may upload media content to a photo sharing website or social network website.

A backhaul network connection from the access node to the upstream network may become saturated or congested during synchronization of media content. Additionally, when more than one client device attempts to utilize an access node concurrently, the client devices may compete for use of the available bandwidth of the backhaul network connection. Synchronization of media content is typically not coordinated among client devices. The size and quantity of content items being uploaded to the server via the access node may impact the upload experience due to congestion of the backhaul network connection.

US 8 214 862 B1 discloses a system and method for managing bandwidth used by videos in a wireless telecommunications network. In one embodiment, the videos originate at mobile devices generating videos of a single event such as a concert, sporting event, graduation, or other event attended by multiple users. The mobile devices may communicate the videos to social networking websites where the videos may be viewed by multiple users. Embodiments of the present invention conserve bandwidth by selecting one or more of the videos of the single event to send to each of the destinations specified by all of the videos capturing the event. An instruction is then sent to each of the mobile devices generating nonselected video streams to discontinue transmission of the video streams.

US 2007/0047657 A1 discloses a data stream encoder eliminating duplicate transmission units in a transmitted data stream in which the detected duplicate may not be the immediately preceding transmission unit. A data aggregator transmits a stream of data by identifying the frame interval, or timing interval, corresponding to the time to send a frame of data in the stream. Each of the frames includes a predetermined number of blocks. Configurations identify repetition patterns in the block of successive frames, thus looking backward a frame interval to identify a previous corresponding block in the preceding frame. The corresponding transmission block need not be the immediately preceding block or transmission unit. For certain types of data, successive frames exhibit the same or similar patterns in the blocks of data defining the frame. Therefore, the encoder identifies duplicate blocks in successive frames, and transmits only the blocks that differ from a counterpart block in the previous frame.

### SUMMARY

The reader is referred to the appended independent claims. Some preferred features are laid out in the dependent claims.

Various aspects are described in which media processing services are performed at an access node. In one embodiment, the access node may receive media content from one or more client devices. The media content may include a plurality of content items. The access node may process at least a first portion of the media content to produce processed media content. The media processing is performed at the access node based at least in part on characteristics of the plurality of content items. After processing at least the first portion of the media content to produce processed media content, the access node may transmit the processed media content to a server.

In some aspects, a method performed by an access node that provides network access for one or more client devices, the method comprises receiving, at the access node, media content from one or more client devices, the media content including a plurality of content items; processing at least a first portion of the media content to produce processed media content at the access node, said processing based at least in part on characteristics of the plurality of content items; and transmitting the processed media content to a server.

In some embodiments, the method further comprises determining the characteristics of the plurality of content items at the access node.

In some embodiments, processing at least the first portion of the media content comprises modifying at least a first content item at the access node using at least one image or audio enhancement process.

In some embodiments, processing at least the first portion of the media content comprises discarding a first content item from the media content if the first content item is incomplete or corrupted.

In some embodiments, processing at least the first portion of the media content comprises determining a first quality metric associated with a first content item; and discarding the first content item if the first quality metric is below a threshold, wherein transmitting the processed media content includes transmitting content items that have quality metrics above the threshold.

In some embodiments, processing at least the first portion of the media content comprises selecting a subset of the plurality of content items as the processed media content to transmit to the server.

In some embodiments, said selecting the subset of the plurality of content items comprises ranking the plurality of content items based on quality metrics; and determining the subset of the plurality of the content items based at least in part on the ranking.

In some embodiments, said selecting the subset of the plurality of content items comprises selecting the subset of the plurality of content items based at least in part on a user data upload limit or backhaul bandwidth availability.

In some embodiments, processing at least the first portion of the media content comprises determining whether a first content item and a second content item include duplicate content; and discarding one of the first content item and the second content item if the first content item and the second content item include duplicate content.

In some embodiments, determining whether the first content item and the second content item include duplicate content comprises determining whether at least a matching image portion is found in both the first content item and the second content item.

In some embodiments, determining the first content item comprises a duplicate of the second content item is based at least in part on a common metadata value found in both the first content item and the second content item.

In some embodiments, processing at least the first portion of the media content comprises determining whether a first content item comprises a scenic view; and discarding the first content based at least in part on scenic filter settings and whether the first content item comprises the scenic view.

In some embodiments, processing at least the first portion of the media content comprises determining facial recognition patterns; and discarding a first content item based on the facial recognition patterns.

In some embodiments, determining facial recognition patterns includes counting a first quantity of content items that include a first face of a first person and counting a second quantity of content items that include a second face of a second person.

In some embodiments, the first content item includes the first face of the first person, and wherein discarding the first content item comprises discarding the first content item if the first quantity of content items that include the first face of the first person is above a face count limit or is above a threshold percentage relative to a total quantity of the plurality of content items.

In some embodiments, processing at least the first portion of the media content comprises preparing, at the access node, a compilation content item that is based at least in part on the plurality of content items and including the compilation content item in the processed media content.

In some embodiments, transmitting the processed media content comprises uploading the processed media content to a social network website; and sharing the processed media content via the social network website on behalf of a user.

In some embodiments, transmitting the processed media content comprises sharing the processed media content on behalf of a second user.

In some embodiments, the method further comprises transmitting the processed media content to a second server.

In some embodiments, receiving the media content comprises intercepting messages directed from the one or more client devices to the server via the access node.

In some embodiments, an access node of a network, the access node comprises a processor; and a memory to store instructions, which when executed by the processor, cause the access node to receive media content from one or more client devices, the media content including a plurality of content items; process at least a first portion of the media content based at least in part on characteristics of the plurality of content items to produce processed media content; and transmit the processed media content to a server.

In some embodiments, causing the access node to process at least the first portion of the media content comprises causing the access node to discard a first content item from the media content if the first content item is incomplete or corrupted.

In some embodiments, causing the access node to process at least the first portion of the media content comprises causing the access node to modify at least a first content item using at least one image or audio enhancement process.

In some embodiments, causing the access node to process at least the first portion of the media content comprises causing the access node to determine a first quality metric associated with a first content item; and discard the first content item if the first quality metric is below a threshold.

In some embodiments, causing the access node to process at least the first portion of the media content comprises causing the access node to determine whether a first content item and a second content item include duplicate content, wherein the first content item and the second content item are determined to include duplicate content when at least one matching image portion is found in both the first content item and the second content item; and discard one of the first content item and the second content item if the first content item and the second content item include duplicate content.

In some embodiments, the causing the access node to process at least the first portion of the media content comprises causing the access node to discard a first content item based on facial recognition patterns.

In some embodiments, the facial recognition patterns are based on a first quantity of content items that include a first face of a first person and a second quantity of content items that include a second face of a second person, and wherein the instructions cause the access node to discard the first content item if the first content item includes the first face of the first person and the first quantity of content items that include the first face of the first person is above a face count limit or is above a threshold percentage relative to a total quantity of the plurality of content items.

In some embodiments, the causing the access node to process at least the first portion of the media content comprises causing the access node to prepare a compilation content item that is based at least in part on the plurality of content items.

In some embodiments, the access node comprises a wireless local area network access point.

In some embodiments, a non-transitory machine-readable medium having instructions stored therein, which when executed by a processor causes the processor to perform operations that comprise receiving, at an access node, media content from one or more client devices, the media content including a plurality of content items; processing at least a first portion of the media content to produce processed media content at the access node, said processing based at least in part on characteristics of the plurality of content items; and transmitting the processed media content to a server.

### BRIEF DESCRIPTION OF THE DRAWINGS

The present embodiments may be better understood, and numerous objects, features, and advantages made apparent to those skilled in the art by referencing the accompanying drawings.
Figure 1 depicts an example system to introduce various concepts of media processing at an access node in accordance with an embodiment of this disclosure.
Figure 2 depicts example operations of media processing at an access node in accordance with an embodiment of this disclosure.
Figure 3 depicts an example timing diagram of media processing at an access node in accordance with an embodiment of this disclosure.
Figure 4 depicts a conceptual diagram as a first example of media processing at an access node in accordance with an embodiment of this disclosure.
Figure 5 depicts a conceptual diagram as a second example of media processing at an access node in accordance with an embodiment of this disclosure.
Figure 6 depicts several example media processing operations that may be performed at an access node in accordance with an embodiment of this disclosure.
Figure 7 depicts an electronic device capable of implementing various embodiments of this disclosure.

### DESCRIPTION

The description that follows includes exemplary systems, methods, techniques, instruction sequences and computer program products that embody techniques of the present subject matter. However, it is understood that the described embodiments may be practiced without these specific details. For instance, although examples may refer to audio, video, or image content items, other types of media content may be processed at an access node. In this disclosure, an access node is any device that provides a wireless or wired connection for the client device to access other networks or servers. The example embodiments described relate to a wireless access node in which the client device(s) are wireless coupled to the access node. In other instances, well-known instruction instances, protocols, structures and techniques have not been shown in detail in order not to obfuscate the description.

Increasingly, client devices provide capability to capture media content. For example, mobile phones may have integrated cameras and microphones. Digital cameras have also been integrated into wearable accessories, such as watches, eyeglasses, or pocket-sized digital video cameras. A wide variety of client devices may be equipped with various media capture capabilities. These client devices may provide an end user with the ability to capture media content, such as audio, video, or image content. The media content may be uploaded from the client device to a server via an access node. The media content may be uploaded from the client device to a server, such as a photo sharing website, social networking website, cloud storage server, and the like.

In accordance with this disclosure, an access node may enhance the upload experience by performing media processing services at the access node. Performing the media processing services at the access node may reduce the bandwidth utilization of a backhaul network connection between the access node and the server. Furthermore, the media processing services may improve the quality and usefulness of the media content that gets uploaded to the server. The access node may have additional processor capability and memory available to perform media processing services that may otherwise be unavailable or limited at the client device. Additionally, the access node may perform the media processing services for a plurality of content items from one or more client devices.

Several examples of media processing services are described in this disclosure. Examples of media processing services may include an image or audio enhancement process, filtering of low quality content items, removal of duplicate content items, categorizing or ranking the content items, filtering based on facial recognition, or other media processing services. The media processing services may also include the generation of a compilation content item, such as a panoramic image or video representation of several photos.

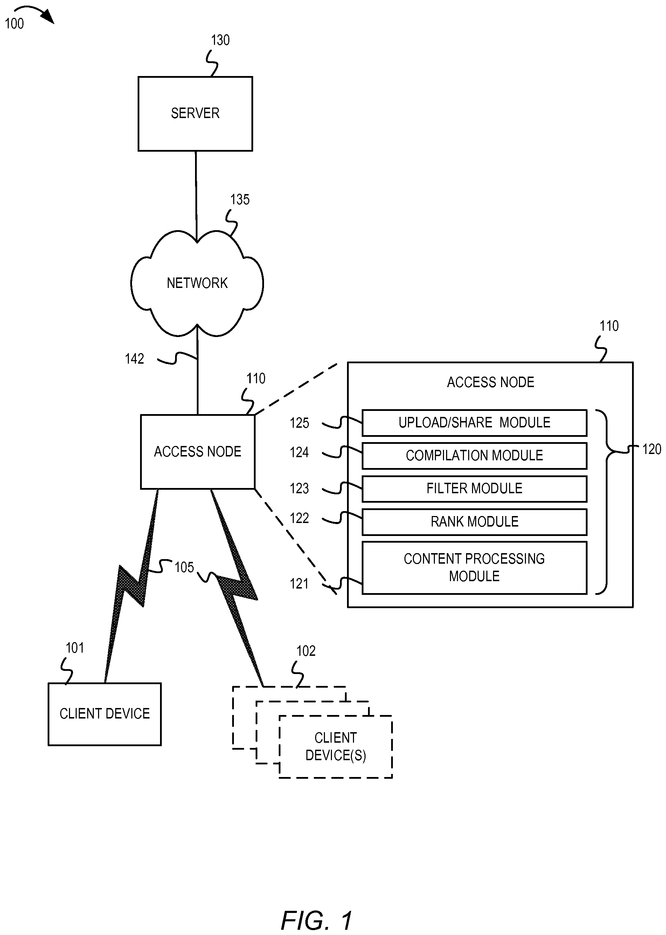

**Figure 1** depicts an example system 100 to introduce various concepts of media processing at an access node 110. A client device 101 and other client device(s) 102 may utilize an access link 105 to communicate via the access node 110. In Figure 1, the access link 105 is depicted as a wireless access link. For example, the access node 110 may be a wireless local area network (WLAN) access point (AP). In other example systems, the access node 110 may be a different type of device that provides access for the client devices to communicate to an upstream network.

In one embodiment, the access node 110 may comprise a mobile device. For example, mobile device may operate as an access node for another mobile device operating as a client device. In one example, the access node 110 may comprise a mobile device that provides network access for a plurality of accessories associated with the mobile device. The plurality of accessories may utilize BLUETOOTH™, or other short-range radio frequency connection, to communicate via the mobile device to an upstream network. For simplicity, in the example system 100 described in Figure 1, the access node 110 comprises a WLAN AP that provides a wireless access link 105 to each of the client device 101 and other client device(s) 102 .

The access node 110 may utilize a backhaul network connection 142 and one or more networks 135 to communicate with a server 130. In a typical communication from the client device 101 to the server 130, the client device 101 may transmit packets having a destination address associated with the server 130. The access node 110 may receive the packets and forward them based on the destination address and network routing. The network route in Figure 1 utilizes the backhaul network connection 142 and the network 135 to reach the server 130. However, the backhaul network connection 142 may be susceptible to congestion or delay, depending on the speed and capacity of the backhaul network connection 142.

During a conventional upload session, the client device 101 may synchronize media content with the server 130 by transmitting media content and waiting for acknowledgement. If other client device(s) 102 are concurrently utilizing the access node 110, the upload session may take longer and cause more power consumption. For example, during family or group events, multiple client devices may utilize an access node at the same time. Each client device may be capturing media content and uploading content via the access node 110. In a conventional mobile device, a photo sharing application may be configured to upload all unsynchronized media content. However, some content items may be more or less desirable to share than others. Uploading an undesirable low quality image may cause delay for uploading the more desirable high quality image. To improve the upload experience and to enhance the quality and desirability of the uploaded images, the access node 110 may provide media processing service(s) 120.

Several example media processing service(s) 120 are envisioned in this disclosure. In various embodiments, one or more different media processing services may be combined. Although many media processing service(s) 120 are described in Figure 1, particular media processing service(s) may be included or omitted in different embodiments. Various combinations and orderings of media processing services may be implemented in different embodiments.

The access node 110 may receive the media content from the client device 101 (and from other client device(s) 102). The media content may include a plurality of content items, such as photographs, videos, sound files, and the like. In some embodiments, the content items may be audio/visual multimedia content items. In one embodiment, the media content may be uploaded from the client device 101 to the access node 110, such that the client device 101 is aware that the access node 110 will process the media content. In another embodiment, the media content is included in messages directed from the client device 101 to the server 130. The access node 110 may intercept the messages and process the media content on behalf of the client device 101 with or without the client device 101 being aware that the access node 110 is intercepting the messages. The access node 110 may identify messages that include media content based on a destination address, website uniform resource location (URL) address, or other field of the messages. Alternatively, or additionally, the access node 110 may perform packet inspection to identify messages that include media content.

One example of the media processing service(s) 120 may include a content processing module 121. The content processing module 121 may enhance or transform content items prior to uploading the content items. For example, the content items may be enhanced by a media enhancement process or compressed to reduce upload size. The media enhancement process may transform the content item. For example, a photograph may be modified by a media enhancement process to adjust color tone, correct for red eye, adjust contrast, etc. In another example, photographs may be modified in accordance with a color scheme or theme (such as sepia, grayscale, or the like). The content processing module 121 may process content items from multiple client devices so that an uploaded collection of content items from multiple client devices have a similar quality.

The content processing module 121 may also compress or otherwise reduce the size of the content item automatically. The amount of compression may depend on the quantity of client devices coupled to the access node 110. Alternatively, the amount of compression may depend on the quantity of content items being uploaded via the backhaul network connection 142 concurrently.

Another example of a media processing service might include a rank module 122 configured to rank content items based on quality. The rank module 122 may determine an order for uploading content items. The rank module 122 may work with the filter module 123 to determine which content items should be uploaded and which content items should be discarded. Removing low quality content items may preserve the backhaul network connection 142 for higher quality content items. For example, a low quality image may be blurry or lacking in recognizable facial features, while a high quality image may be sharp with recognizable faces.

The rank module 122 may determine a quality metric for each of a plurality of content items. Content items having a higher quality may be uploaded to the server on behalf of the client device, while content items having a lower quality may be discarded. For photo or video content items, the quality metric may be based on sharpness, blurriness, contrast, brightness, resolution, color accuracy, distortion, vignetting, dynamic range, lens flare, moire patterns, or other characteristics of the content item. For audio content items, the quality metric may be based on voice recognition, noise, clipping, speech clarity, or the like.

A threshold may be used by the rank module 122 to determine which quality metric values represent high quality content items and which quality metric values represent low quality items. The threshold may be system-defined, user-defined, or dynamically adjusting. For example, the threshold may dynamically change in relation to the quantity of content items and/or the current bandwidth availability of the backhaul network connection 142. When the backhaul network connection 142 is congested or saturated, the threshold may be increased such that the uploaded content items are of the highest quality. When the backhaul network connection 142 is not congested or saturated, the threshold may be decreased such that more content items may be uploaded.

A filter module 123 may be included in the media processing service(s) 120. In one example, the filter module 123 may filter low quality content items based on the quality metric and/or ranking provided by the rank module 122. The filter module 123 may discard content items below the quality threshold.

In another example, the filter module 123 may discard redundant content items. For example, the filter module 123 may be configured to identify two content items that have redundant content. The redundant content item may be identical, duplicate, or overlapping to another content item. Consider two photographs taken at the same scene by two different client devices. Each client device may attempt to upload a photograph that is redundant to the other. The filter module 123 may identify that the scene matches and discard one of redundant content items. Metadata in the content items may help the filter module 123 to identify redundant content items. For example, the filter module 123 may determine that two content items have common or close timestamp. The filter module 123 may compare the content items with the common or close timestamp to determine if they are directed at the same scene or have the faces of the same group of people. The filter module 123 may discard the lower quality redundant content item. Alternatively, the filter module 123 may keep the first received redundant content item and discard the later received redundant content item.

Another example of a filter may include an event-based filter. For example, the filter module 123 may utilize metadata, such as timestamp or position information, to select or deselect content items for an event. In an embodiment, such as where the media processing service(s) 120 includes a compilation module 124, the event-based filter may be used to discard content items that are not related in time and/or location.

Other examples of filters may be implemented. For example, a filter may be configured to remove photographs that do not have a person's face. Alternatively, a filter may be configured to keep photographs that have a scenic view (such as a skyline or outdoor view) and discard other photographs. Filters may be used to keep or discard content items based on lighting.

Filters may be used to identify persons. For example, the filter module 123 may determine facial recognition patterns among the content items. Determining facial recognition patterns may include counting a first quantity of content items that include a first face of a first person and counting a second quantity of content items that include a second face of a second person. The filter module 123 may discard a content item if the first quantity of content items is above a face count limit or is above a threshold percentage relative to a total quantity of the plurality of content items.

A compilation module 124 may be included in the media processing service(s) 120. The compilation module 124 may be used to collect content items into an album or collection. For example, the compilation module 124 may create a photo album with multiple photographs from several client devices. In one embodiment, the compilation module 124 may create a panoramic view from several image content items. In another embodiment, the compilation module 124 may create a video representation of several image content items. The compilation module 124 may generate a compilation content item that can be uploaded in addition to or in lieu of the multiple content items.

An upload/share module 125 may enhance the uploading and sharing of content items from one or more client devices. For example, the upload/share module 125 may group content items from different client devices to create a more complete media content album. The upload/share module 125 may be configured to upload content items to a photo sharing website or social networking website on behalf of an account owner for the photo sharing website or social networking website. In one embodiment, the upload/share module 125 may be configured to upload content items to multiple photo sharing or social networking websites using a plurality of accounts. The upload/share module 125 may "post" the content items on behalf of one or more users who provide permissions for the upload/share module 125 to post on their behalf. For example, users of a social networking website may grant permission to an "application" that has permission to post on their behalf. The upload/share module 125 may transmit the content items to a server associated with the application, such that the application can then post the content items to multiple accounts.

The upload/share module 125 may utilize facial detection to automatically tag or link persons that are included in the content item(s). The upload/share module 125 may also determine which client device(s) or server(s) should receive the processed content items.

Many other media processing services 120 may be implemented. Several thresholds or configurations may be used with the media processing service(s) 120. For example, information about a user data plan, upstream bandwidth, or cloud storage size may be used to modify a threshold that impacts the quantity of content items that are uploaded. User upload history or user preferences may also be used to dynamically adjust the thresholds.

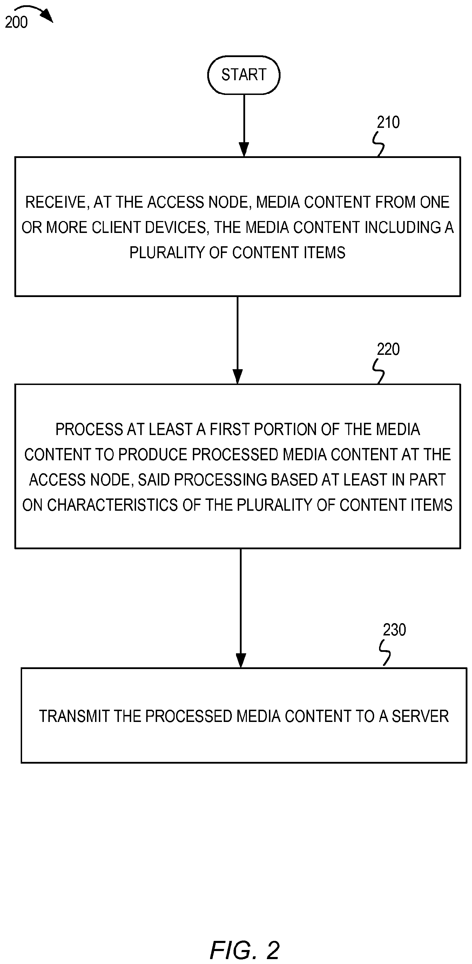

**Figure 2** depicts example operations (flow 200) of media processing at an access node that provides network access for one or more client devices. At block 210, the access node may receive media content from one or more client devices. The media content may include a plurality of content items. At block 220, the access node may process at least a first portion of the media content to produce processed media content at the access node. The access node may process the media content based at least in part on characteristics of the plurality of content items. At block 230, the access node may transmit the processed media content to a server.

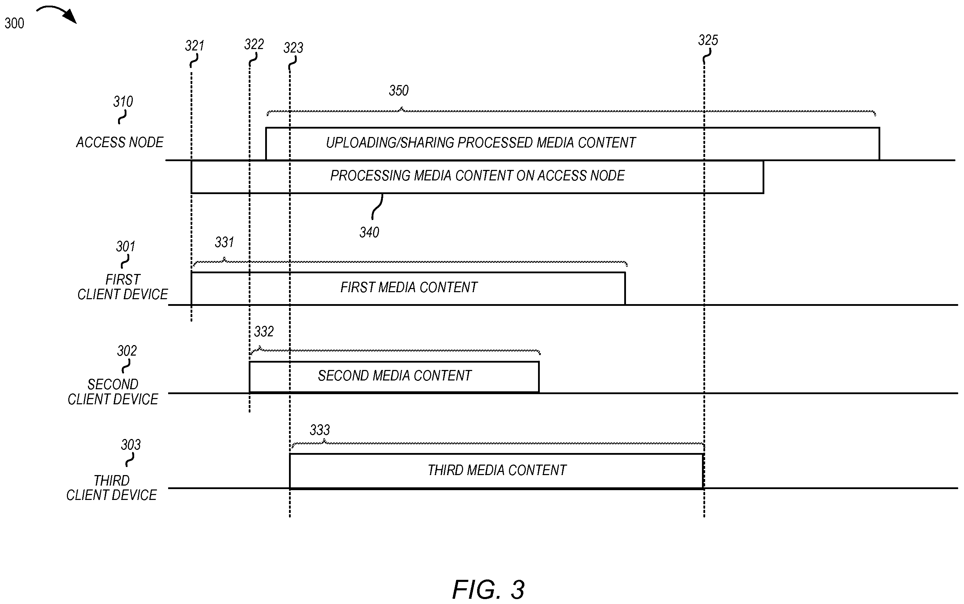

**Figure 3** depicts an example timing diagram 300 of media processing at an access node in accordance with an embodiment of this disclosure. In Figure 3, an access node 310 may receive media content from a first client device 301, a second client device 302, and a third client device 303. The example timing diagram 300 is provided to illustrate that timing for processing media content at the access node 310 and the uploading/sharing of the processed media content may or may not be arbitrary with regard to times at which the access node 310 receives uploaded media content.

At first time instant 321, the first client device 301 may begin uploading first media content 331. For example, a synchronization process at the first client device 301 may begin to transmit content items to the access node 310. The content items may be included in messages directed to a server (not shown) accessible by the access node 310. In one embodiment, the access node 310 intercepts the messages and begins processing 340 the media content at the access node. At least a first portion of the media content may be processed to produce processed media content. At some point after processing 340 has begun, the access node 310 may upload or share the processed media content 350. Uploading of a first portion of processed media content may occur while the access node continues processing 340 a second portion of the media content.

At second time instant 322, the second client device 302 may begin uploading second media content 332. Similarly, at third time instant 323, the third client device 303 may begin uploading third media content 333. It is noted that the various client devices may not begin uploading media content at the same time. The access node 310 may be configured to delay the upload of processed media content for a period of time to determine if multiple client devices are uploading related media content. Alternatively, the access node 310 may automatically adjust the media processing service(s) when media content is received from an additional client device.

In one embodiment, processing 340 of the media content may continue even after a last portion of the third media content 333 has been received. The third client device 303 may discontinue transmission and thus save battery resources, while the access node 310 continues to process the media content on behalf of the third client device 303. Similarly, the uploading and sharing of processed media content 350 may continue as media content is processed and as the backhaul network connection allows. This may be useful, for example, when the multiple client devices upload separate content items and the access node 310 prepares a compilation content item to upload and share on behalf of an end user.

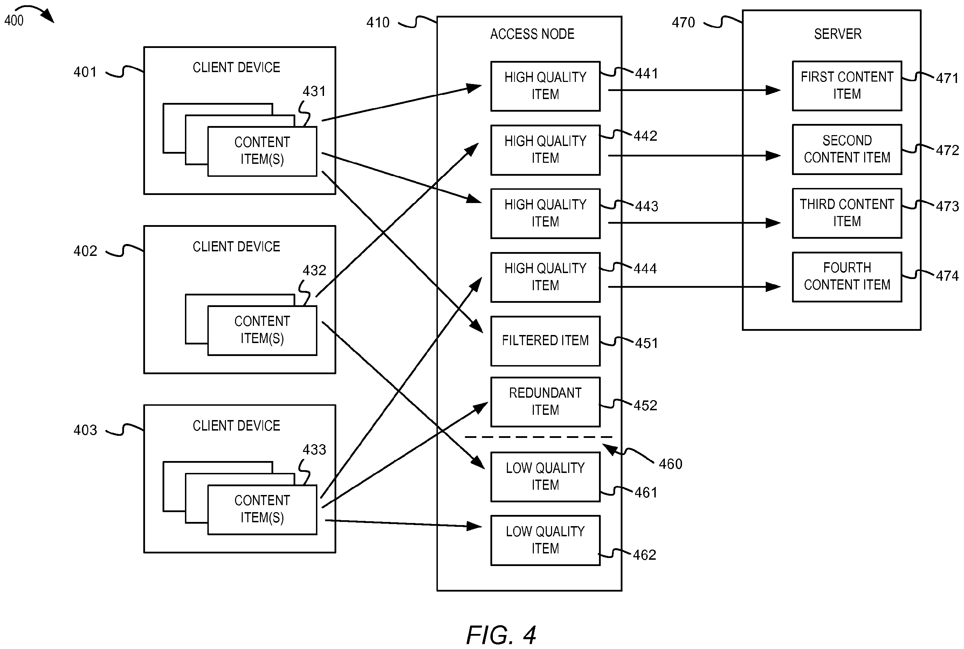

**Figure 4** depicts a conceptual diagram 400 in which multiple client devices upload media content via an access node 410. The media content includes a plurality of content items, including content item(s) 431 from a first client device 401, content item(s) 432 from a second client device 402, and content item(s) 433 from a third client device 403.

In the example of Figure 4, the access node 410 includes ranking and filtering features. The content items 431, 432, 433 may be analyzed to determine a quality metric for each content item. The quality metric may be compared with a quality threshold 460 to identify low quality items. For example, low quality item 461 and low quality item 462 are content items that have a quality metric below the quality threshold 460. The remaining items may be deemed high quality items 441, 442, 443, 444.

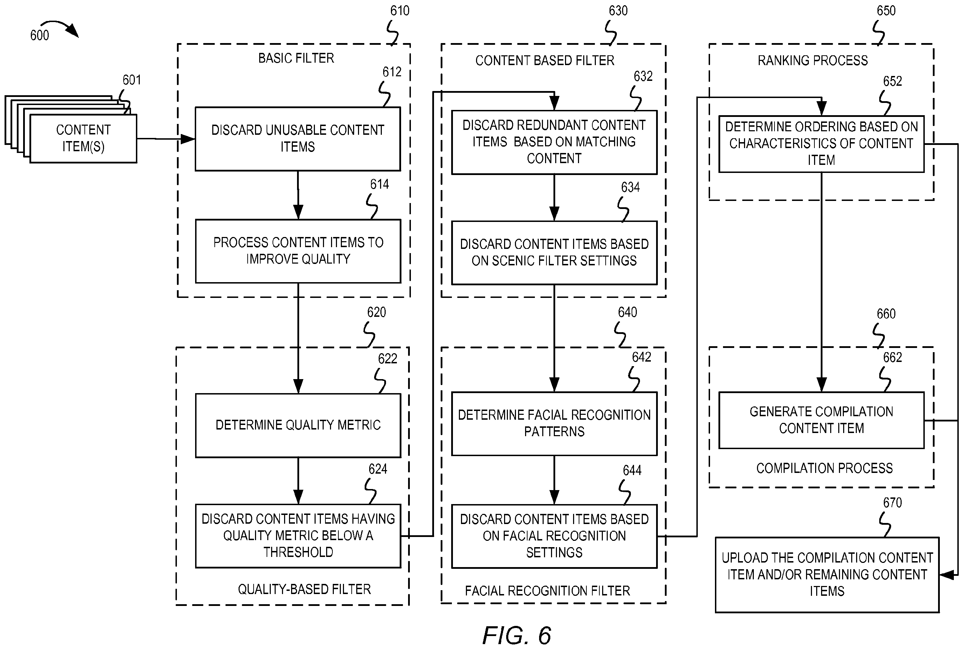

In Figure 4, a redundant item 452 was determined to be above the quality threshold 460 but was redundant to one of the other content items. Additionally, a filtered item 451 represents an example of the access node 410 filtering an item based on other filter settings. For example, the filtered item 451 may have been discarded based on a facial recognition pattern, or other filter. Various example figures are further described in Figure 6.

The access node 410 may discard the redundant item 452, the filtered item 451, and low quality items 461, 462. Therefore, the backhaul network connection may be preserved for more quickly upload the high quality items 441, 442, 443, 444 to the server 470.

In one embodiment, the access node 410 may also utilize the quality metric to determine an order for uploading the content item. For example, the high quality item 441 may have the highest quality metric and may be uploaded first to the server 470. As such, the first content item 471 may be uploaded first and may be the "best" content item from among the content items 431, 432, 433 received by the access node 410 from client devices 401, 402, 403. Subsequently, the second content item 472, third content item 473, and fourth content item 474 may be uploaded in order based on the quality metric determined at the access node 410.

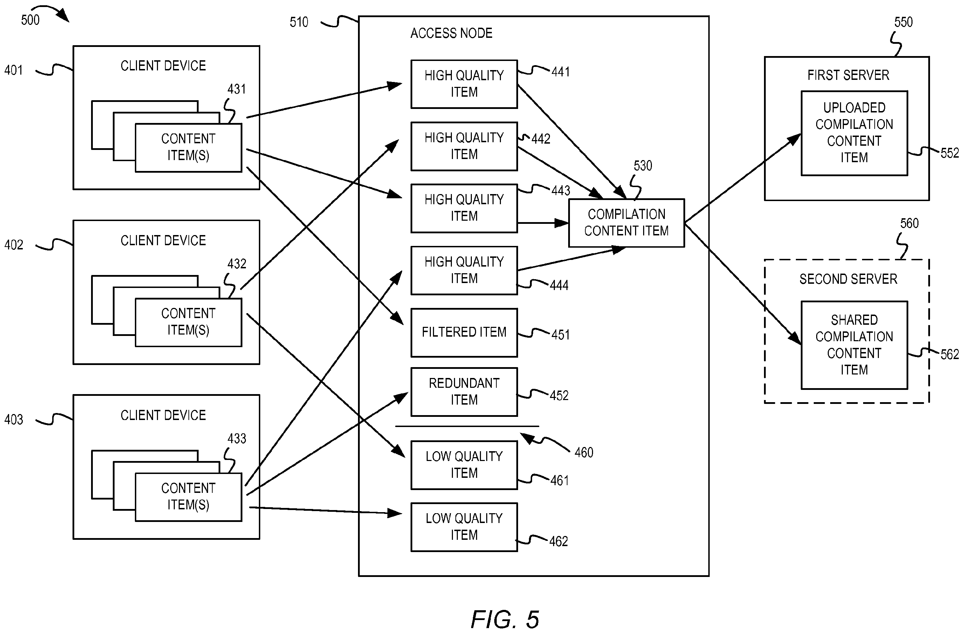

**Figure 5** depicts a conceptual diagram 500 in which an access node 510 (similar to access node 410) prepares a compilation content item based on a plurality of content items. The access node 510 may receive content item(s) 431 from a first client device 401, content item(s) 432 from a second client device 402, and content item(s) 433 from a third client device 403. Similar to Figure 4, the access node 510 may rank the content items 432, 432, 433 based on quality. A filtered item 451 may be discarded based on filter settings even if the quality of the filtered item 451 is above the quality threshold 460. Redundant item 452 may also be discarded for being redundant to one of the high quality items 441, 442, 443, 444. The high quality items 441, 442, 443, 444 represent content items having a quality metric above the quality threshold 460 and not filtered or discarded for another reason. Low quality items 461 may be discarded for having a quality metric below the quality threshold 460.

In Figure 5, the access node 510 may produce a compilation content item 530 based on the high quality items 441, 442, 443, 444. For example, the compilation content item 530 may be a panoramic image, a video composition of several content items, a photo album, or the like. The compilation content item 530 may be derived from the high quality items 441, 442, 443, 444, but does not necessarily contain all of the media content from the high quality items 441, 442, 443, 444. For example, the compilation content item 530 may be a photo collage having portions of images from the high quality items 441, 442, 443, 444. Other examples of compilation content item 530 may be readily conceived.

The access node 510 may upload the compilation content item 530 to a first server 550. In one embodiment, the access node 510 may be configured to share the uploaded compilation content item 552. For example, the access node 510 may tag, share, link, or otherwise, associate the uploaded compilation content item 552 to end users associated with the first client device 401, second client device 402, and third client device 403. In another example, the access node 510 may utilize facial recognition to identify people included in the compilation content item 530 and share the uploaded compilation content item 552 with those people.

The access node 510 may also upload the compilation content item 530 to a second server 560. For example, the access node 510 may cause shared compilation content item 562 to be stored on a social network website, photo sharing website, or cloud server.

**Figure 6** is a conceptual diagram 600 that depicts several example media processing operations that may be performed at an access node in accordance with this disclosure. Portions of Figure 6 may be included or omitted in various embodiments. Furthermore, ordering of the media processing operations may be changed in different embodiments.

Figure 6 includes several example filters and processes, including a basic filter 610, quality-based filter 620, content based filter 630, facial recognition filter 640, ranking process 650, and compilation process 660. The access node receives plurality of content item 601 from one or more client devices. In the basic filter 610, the access node may discard unusable content items 612. For example, a content item may be discarded if the access node is unable to open, decode, or render the content item. Unusable content items may include content items that are corrupted or incomplete. Such content items may be discarded to reduce the amount of media processing at the access node and reduce the upload requirements of the backhaul network connection.

In the basic filter 610, the access node may also process content items to improve quality 614. For example, the basic filter 610 may include a contrast, color, tone, brightness, redeye, or other automatic enhancement process that can be applied to content items.

In the quality-based filter 620, the access node may determine a quality metric 622 for each content item. The quality-based filter 620 may discard content items having a quality metric below a quality threshold 624. As described previously, the quality threshold may be user-defined, system-defined, or dynamically determined.

In the content based filter 630, the access node may discard redundant content items based on matching content 632. The access node may also discard content items based on scenic filter settings 634. For example, the scenic filter settings may indicate whether content items should be discarded or kept based on quantity of faces in the content item, or the identification of outdoor scene, landscape, skyline, or the like.

In the facial recognition filter 640, the access node may determine facial recognition patterns 642. For example, the facial recognition filter 640 may identify persons and categorize the content items based on identified persons. The facial recognition filter 640 may discard content items based on facial recognition settings 644. For example, the facial recognition filter 640 may attempt to include only the content items that have a particular person and discard content items that do not include the particular person. Alternatively, the facial recognition filter 640 may attempt to create an even distribution of content items among various persons, such that no one person monopolizes the collection of content items.

At ranking process 650, the access node may determine ordering of the content items based on characteristics of the content items 652. For example, the quality metric 622, facial recognition patterns 642, or other information may be used to rank the content items. Alternatively, the access node may use a timestamp data embedded in the content items to order the content items. In one embodiment, even if content items are uploaded at different times, the access node may rearrange the content items into the proper chronological order.

At compilation process 660, the access node may generate a compilation content item 665. As described previously, the compilation content item 665 may represent a new content item that is derived from a plurality of content items.

The access node may upload 670 the compilation content item and/or the content items that have not been discarded by the basic filter 610, quality-based filter 620, content based filter 630, or facial recognition filter 640. In one embodiment, the ranking process 650 may be used to determine the order in which the access node uploads the content items.

In one embodiment, the access node may select a subset of the plurality of content items 601 to transmit to the server. The subset of content items to upload may be based at least in part a ranking of content items by ranking process 650 or the quality metrics 622. The access node may determine a quantity of content items to include in the subset based at least in part on an upload limit, user data plan, or backhaul bandwidth availability.

Figures 1-6 and the operations described herein are examples meant to aid in understanding various embodiments and should not limit the scope of the claims. Embodiments may perform additional operations, fewer operations, operations in parallel or in a different order, and some operations differently.

As will be appreciated by one skilled in the art, aspects of the present disclosure may be embodied as a system, method, or computer program product. Accordingly, aspects of the present disclosure may take the form of an entirely hardware embodiment, a software embodiment (including firmware, resident software, micro-code, etc.) or an embodiment combining software and hardware aspects that may all generally be referred to herein as a "circuit," "unit" or "system." Furthermore, aspects of the present disclosure may take the form of a computer program product embodied in one or more computer readable medium(s) having computer readable program code embodied thereon.

Any combination of one or more computer readable medium(s) may be utilized, with the sole exception being a transitory, propagating signal. The computer readable medium may be a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Computer program code embodied on a computer readable medium for carrying out operations for aspects of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described with reference to flowchart illustrations and/or block diagrams of methods, apparatus (systems) and computer program products according to embodiments of the present disclosure. Each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks. The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

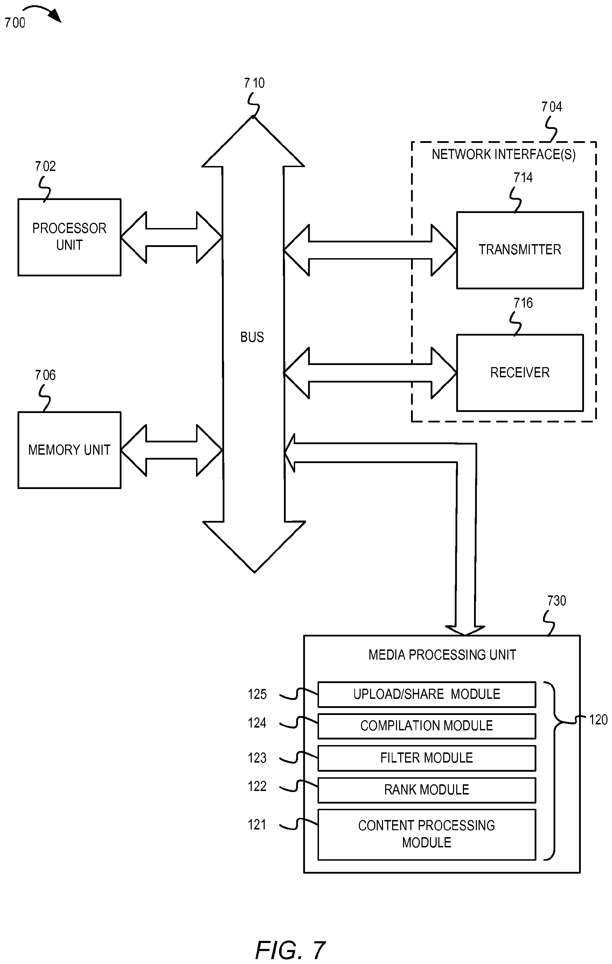

**Figure 7** is an example block diagram of one embodiment of an electronic device 700 capable of implementing various embodiments of this disclosure. For example, the electronic device 700 implement functionality described as any one of access nodes 110, 310, 410. In some implementations, the electronic device 700 may be an access point, small cell base station, cellular base station, LAN switch, or the like. In some implementations, the electronic device 700 may be an electronic device such as a laptop computer, a tablet computer, a mobile phone, a powerline communication device, a gaming console, or other electronic systems. The electronic device 700 includes a processor unit 702 (possibly including multiple processors, multiple cores, multiple nodes, and/or implementing multi-threading, etc.). The electronic device 700 includes a memory unit 706. The memory unit 706 may be system memory (e.g., one or more of cache, SRAM, DRAM, zero capacitor RAM, Twin Transistor RAM, eDRAM, EDO RAM, DDR RAM, EEPROM, NRAM, RRAM, SONOS, PRAM, etc.) or any one or more of the above already described possible realizations of machine-readable media. The electronic device 700 also includes a bus 701 (e.g., PCI, ISA, PCI-Express, HyperTransport®, InfiniBand®, NuBus, AHB, AXI, etc.). The electronic device 710 may include one or more network interfaces 704 that may be a wireless network interface (e.g., a WLAN interface, a Bluetooth® interface, a WiMAX interface, a ZigBee® interface, a Wireless USB interface, etc.) or a wired network interface (e.g., a powerline communication interface, an Ethernet interface, etc.). A network interface 704 may include a transmitter 714 and a receiver 716. In some embodiments, the transmitter 714 and receiver 716 may be part of a communication unit having both transmitting and receiving capability. For example, the transmitter 714 and receiver 716 may be collocated as a transceiver.

The electronic device 700 may include a media processing unit 730 configured to implement various embodiments described in the previous figures. For example, the media processing unit 730 may provide media processing service(s) 120. The media processing service(s) 120 may include one or more of the content processing module 121, rank module 122, filter module 123, compilation module 124, upload/share module 125 described in Figure 1 or the corresponding functionality described in Figure 6.

Any one of these functionalities may be partially (or entirely) implemented in hardware and/or on the processor unit 702. For example, the functionality may be implemented with an application specific integrated circuit, in logic implemented in the processor unit 702, in a co-processor on a peripheral device or card, etc. Further, realizations may include fewer or additional components not illustrated in Figure 11 (e.g., video cards, audio cards, additional network interfaces, peripheral devices, etc.). The processor unit 702, the memory unit 706, network interfaces 704 may be coupled to the bus 701. Although illustrated as being coupled to the bus 701, the memory unit 706 may be directly coupled to the processor unit 702.

While the embodiments are described with reference to various implementations and exploitations, these embodiments are illustrative and that the scope of the present disclosure is not limited to them. In general, techniques for providing media processing services on an access node as described herein may be implemented with facilities consistent with any hardware system or hardware systems. Many variations, modifications, additions, and improvements are possible.

Plural instances may be provided for components, operations or structures described herein as a single instance. Finally, boundaries between various components, operations and data stores are somewhat arbitrary, and particular operations are illustrated in the context of specific illustrative configurations. Other allocations of functionality are envisioned and may fall within the scope of the present disclosure. In general, structures and functionality presented as separate components in the exemplary configurations may be implemented as a combined structure or component. Similarly, structures and functionality presented as a single component may be implemented as separate components. These and other variations, modifications, additions, and improvements may fall within the scope of the present disclosure.
In the following, further aspects are described to facilitate the understanding of the invention:
1. A method performed by an access node that provides network access for one or more client devices, the method comprising:
   receiving, at the access node, media content from one or more client devices, the media content including a plurality of content items;
   processing at least a first portion of the media content to produce processed media content at the access node, said processing based at least in part on characteristics of the plurality of content items; and
   transmitting the processed media content to a server.
2. The method of 1, further comprising:
   determining the characteristics of the plurality of content items at the access node.
3. The method of 1, wherein processing at least the first portion of the media content comprises:
   modifying at least a first content item at the access node using at least one image or audio enhancement process.
4. The method of 1, wherein processing at least the first portion of the media content comprises discarding a first content item from the media content if the first content item is incomplete or corrupted.
5. The method of 1, wherein processing at least the first portion of the media content comprises:
   determining a first quality metric associated with a first content item; and
   discarding the first content item if the first quality metric is below a threshold, wherein
   transmitting the processed media content includes transmitting content items that have quality metrics above the threshold.
6. The method of 1, wherein processing at least the first portion of the media content comprises:
   selecting a subset of the plurality of content items as the processed media content to transmit to the server.
7. The method of 6, wherein said selecting the subset of the plurality of content items comprises:
   ranking the plurality of content items based on quality metrics; and
   determining the subset of the plurality of the content items based at least in part on the ranking.
8. The method of 6, wherein said selecting the subset of the plurality of content items comprises selecting the subset of the plurality of content items based at least in part on a user data upload limit or backhaul bandwidth availability.
9. The method of 1, wherein processing at least the first portion of the media content comprises:
   determining whether a first content item and a second content item include duplicate content; and
   discarding one of the first content item and the second content item if the first content item and the second content item include duplicate content.
10. The method of 9, wherein determining whether the first content item and the second content item include duplicate content comprises determining whether at least a matching image portion is found in both the first content item and the second content item.
11. The method of 9, wherein determining the first content item
   comprises a duplicate of the second content item is based at least in part on a common metadata value found in both the first content item and the second content item.
12. The method of 1, wherein processing at least the first portion of the media content comprises:
   determining whether a first content item comprises a scenic view; and
   discarding the first content based at least in part on scenic filter settings and whether the first content item comprises the scenic view.
13. The method of 1, wherein processing at least the first portion of the media content comprises:
   determining facial recognition patterns; and
   discarding a first content item based on the facial recognition patterns.
14. The method of 13, wherein determining facial recognition patterns includes counting a first quantity of content items that include a first face of a first person and counting a second quantity of content items that include a second face of a second person.
15. The method of 14,
   wherein the first content item includes the first face of the first person, and
   wherein discarding the first content item comprises discarding the first content item if the first quantity of content items that include the first face of the first person is above a face count limit or is above a threshold percentage relative to a total quantity of the plurality of content items.
16. The method of 1, wherein processing at least the first portion of the media content comprises
   preparing, at the access node, a compilation content item that is based at least in part on the plurality of content items and including the compilation content item in the processed media content.
17. The method of 1, wherein transmitting the processed media content comprises:
   uploading the processed media content to a social network website; and
   sharing the processed media content via the social network website on behalf of a user.
18. The method of 1, wherein transmitting the processed media content comprises:
   sharing the processed media content on behalf of a second user.
19. The method of 1, further comprising:
   transmitting the processed media content to a second server.
20. The method of 1, wherein receiving the media content comprises intercepting messages directed from the one or more client devices to the server via the access node.
21. An access node of a network, the access node comprising:
   a processor; and
   a memory to store instructions, which when executed by the processor, cause the access node to:
      receive media content from one or more client devices, the media content including a plurality of content items;
      process at least a first portion of the media content based at least in part on characteristics of the plurality of content items to produce processed media content; and
      transmit the processed media content to a server.
22. The access node of 21, wherein causing the access node to process at least the first portion of the media content comprises causing the access node to discard a first content item from the media content if the first content item is incomplete or corrupted.
23. The access node of 21, wherein causing the access node to process at least the first portion of the media content comprises causing the access node to modify at least a first content item using at least one image or audio enhancement process.
24. The access node of 21, wherein causing the access node to process at least the first portion of the media content comprises causing the access node to:
   determine a first quality metric associated with a first content item; and
   discard the first content item if the first quality metric is below a threshold.
25. The access node of 21, wherein causing the access node to process at least the first portion of the media content comprises causing the access node to:
   determine whether a first content item and a second content item include duplicate content, wherein the first content item and the second content item are determined to include duplicate content when at least one matching image portion is found in both the first content item and the second content item; and
   discard one of the first content item and the second content item if the first content item and the second content item include duplicate content.
26. The access node of 21, wherein the causing the access node to
   process at least the first portion of the media content comprises causing the access node to discard a first content item based on facial recognition patterns.
27. The access node of 26, wherein the facial recognition patterns are based on a first quantity of content items that include a first face of a first person and a second quantity of content items that include a second face of a second person, and wherein the instructions cause the access node to discard the first content item if the first content item includes the first face of the first person and the first quantity of content items that include the first face of the first person is above a face count limit or is above a threshold percentage relative to a total quantity of the plurality of content items.
28. The access node of 21, wherein the causing the access node to process at least the first portion of the media content comprises causing the access node to prepare a compilation content item that is based at least in part on the plurality of content items.
29. The access node of 21, wherein the access node comprises a wireless local area network access point.
30. A non-transitory machine-readable medium having instructions stored therein, which when executed by a processor causes the processor to perform operations that comprise:
   receiving, at an access node, media content from one or more client devices, the media content including a plurality of content items;
   processing at least a first portion of the media content to produce processed media content at the access node, said processing based at least in part on characteristics of the plurality of content items; and
   transmitting the processed media content to a server.

## Claims

1. A method performed by an access node (410) that provides network access for one or more client devices, the method comprising:
receiving, at the access node (410), a plurality of media content items (431-433) from the one or more client devices (401-403);
generating processed media content at the access node (410), wherein the processed media content is based at least in part on a subset of the plurality of media content items (431-433), the subset selected based at least in part on a backhaul bandwidth availability of the access node (410); and
transmitting the processed media content to a server (470).

2. The method of claim 1, further comprising:
determining characteristics of the plurality of media content items (431-433) at the access node (410), wherein said generating is further based at least in part on the characteristics of the plurality of media content items (431-433).

3. The method of claim 1, wherein generating the processed media content comprises:
modifying at least a first media content item at the access node (410) using at least one image or audio enhancement process.

4. The method of claim 1, wherein generating the processed media content comprises discarding, at the access node (410), a first media content item from the plurality of media content items if the first media content item is incomplete or corrupted.

5. The method of claim 1, wherein generating the processed media content comprises:
determining a first quality metric associated with a first media content item (461, 462); and
discarding the first media content item (461, 462) if the first quality metric is below a threshold (460), wherein
the processed media content includes media content items (441-444,451,452) that have quality metrics above the threshold (460).

6. The method of claim 1, wherein generating the processed media content comprises:
determining that two media content items (441-444, 452) have redundant content, wherein the redundant content is identical, duplicate, and/or overlapping content within the two media content items (441-444, 452); and
discarding one of the two media content items (441-444,452) that have the redundant content.

7. The method of claim 6, wherein determining that the two media content items (441-444,452) have the redundant content comprises determining that at least a matching image portion is found in both of the two media content items.

8. The method of claim 1, generating the processed media content comprises:
determining whether a first media content item comprises a scenic view; and
discarding the first media content item based at least in part on scenic filter settings and whether the first media content item comprises the scenic view.

9. The method of claim 1, wherein generating the processed media content comprises
preparing, at the access node (510), a compilation content item (530) that is based at least in part on the subset of the plurality of media content items (441-444) and including the compilation content item (530) in the processed media content.

10. The method of claim 1, wherein transmitting the processed media content comprises:
uploading the processed media content to a social network website; and
sharing the processed media content via the social network website on behalf of a user.

11. The method of claim 1, wherein transmitting the processed media content comprises:
sharing the processed media content on behalf of a user.

12. The method of claim 1, further comprising:
transmitting the processed media content to a second server.

13. The method of claim 1, wherein receiving the plurality of media content items (431-433) comprises intercepting messages directed from the one or more client devices (401-403) to the server (470) via the access node (410).

14. An access node (410) of a network, the access node (410) comprising:
a processor (702); and
a memory (706) to store instructions, which when executed by the processor (702), cause the access node (410) to:
receive a plurality of media content items (431-433) from one or more client devices (401-403);
generate processed media content at the access node (410), wherein the processed media content is based at least in part on a subset of the plurality of media content items (431-433), the subset selected based at least in part on a backhaul bandwidth availability of the access node (410); and
transmit the processed media content to a server (470).

15. A computer program comprising instructions to cause at least one computer to perform the steps according to any of claims 1 - 13.

## Patentansprüche

1. Verfahren, das von einem Zugangsknoten (410) ausgeführt wird, der Netzwerkzugriff für ein oder mehrere Client-Geräte bereitstellt, wobei das Verfahren aufweist:
Empfangen einer Mehrzahl von Medieninhaltselementen (431 - 433) an dem Zugangsknoten (410) von dem einen oder den mehreren Client-Geräten (401 - 403);
Erzeugen eines verarbeiteten Medieninhalts an dem Zugangsknoten (410), wobei der verarbeitete Medieninhalt zumindest teilweise auf einer Teilmenge der Mehrzahl von Medieninhaltselementen (431 - 433) basiert, wobei die ausgewählte Teilmenge zumindest teilweise auf einer Backhaul-Bandbreitenverfügbarkeit des Zugangsknotens (410) basiert; und
Übertragen des verarbeiteten Medieninhalts an einen Server (470).

2. Verfahren nach Anspruch 1, weiter aufweisend:
Bestimmen von Eigenschaften der Mehrzahl von Medieninhaltselementen (431 - 433) an dem Zugangsknoten (410), wobei das Erzeugen weiter zumindest teilweise auf den Eigenschaften der Mehrzahl von Medieninhaltselementen (431 - 433) basiert.

3. Verfahren nach Anspruch 1, wobei Erzeugen des verarbeiteten Medieninhalts aufweist:
Modifizieren mindestens eines ersten Medieninhaltselements an dem Zugangsknoten (410) unter Verwendung mindestens eines Bild- oder Tonverbesserungsprozesses.

4. Verfahren nach Anspruch 1, wobei Erzeugen des verarbeiteten Medieninhalts Verwerfen eines ersten Medieninhaltselements aus der Vielzahl von Medieninhaltselementen an dem Zugangsknoten (410) aufweist, wenn das erste Medieninhaltselement unvollständig oder beschädigt ist.

5. Verfahren nach Anspruch 1, wobei Erzeugen des verarbeiteten Medieninhalts aufweist:
Bestimmen einer ersten Qualitätsmetrik, die einem ersten Medieninhaltselement (461, 462) zugeordnet ist; und
Verwerfen des ersten Medieninhaltselements (461, 462), wenn die erste Qualitätsmetrik unter einem Schwellenwert (460) liegt, wobei
der verarbeitete Medieninhalt Medieninhaltselemente (441-444, 451, 452) aufweist, die Qualitätsmetriken über dem Schwellenwert (460) haben.

6. Verfahren nach Anspruch 1, wobei Erzeugen des verarbeiteten Medieninhalts aufweist:
Bestimmen, dass zwei Medieninhaltselemente (441-444, 452) einen redundanten Inhalt haben, wobei der redundante Inhalt ein identischer, doppelter und/oder überlappender Inhalt innerhalb der zwei Medieninhaltselemente (441-444, 452) ist; und
Verwerfen eines der zwei Medieninhaltselemente (441-444, 452), die den redundanten Inhalt haben.

7. Verfahren nach Anspruch 6, wobei Bestimmen, dass die zwei Medieninhaltselemente (441 - 444, 452) den redundanten Inhalt haben, Bestimmen aufweist, dass zumindest ein übereinstimmender Bildabschnitt in beiden der zwei Medieninhaltselemente gefunden wird.

8. Verfahren nach Anspruch 1, wobei Erzeugen des verarbeiteten Medieninhalts aufweist:
Bestimmen, ob ein erstes Medieninhaltselement eine szenische Ansicht aufweist; und
Verwerfen des ersten Medieninhaltselements basierend zumindest teilweise auf szenischen Filtereinstellungen und darauf, ob das erste Medieninhaltselement die szenische Ansicht aufweist.

9. Verfahren nach Anspruch 1, wobei Erzeugen des verarbeiteten Medieninhalts aufweist
Vorbereiten eines Kompilierungsinhaltselements (530) an dem Zugangsknoten (510), das zumindest teilweise auf der Teilmenge der Mehrzahl von Medieninhaltselementen (441-444) basiert und aufnehmen des Kompilierungsinhaltselements (530) in den verarbeiteten Medieninhalt.

10. Verfahren nach Anspruch 1, wobei Übertragen des verarbeiteten Medieninhalts aufweist:
Hochladen des verarbeiteten Medieninhalts auf eine Website eines sozialen Netzwerks; und
Teilen des verarbeiteten Medieninhalts über die Website des sozialen Netzwerks im Auftrag eines Benutzers.

11. Verfahren nach Anspruch 1, wobei Übertragen des verarbeiteten Medieninhalts aufweist:
Teilen des verarbeiteten Medieninhalts im Auftrag eines Benutzers.

12. Verfahren nach Anspruch 1, weiter aufweisend:
Übertragen des verarbeiteten Medieninhalts an einen zweiten Server.

13. Verfahren nach Anspruch 1, wobei Empfangen der Mehrzahl von Medieninhaltselementen (431 - 433) Abfangen von Nachrichten aufweist, die von dem einen oder den mehreren Client-Geräten (401 - 403) über den Zugangsknoten (410) an den Server (470) gerichtet sind.

14. Zugangsknoten (410) eines Netzwerks, wobei der Zugangsknoten (410) aufweist:
einen Prozessor (702); und
einen Speicher (706) zum Speichern von Anweisungen, die, wenn sie von dem Prozessor (702) ausgeführt werden, den Zugangsknoten (410) veranlassen zum:
Empfangen einer Mehrzahl von Medieninhaltselementen (431 - 433) von einem oder mehreren Client-Geräten (401 - 403);
Erzeugen eines verarbeiteten Medieninhalts an dem Zugangsknoten (410), wobei der verarbeitete Medieninhalt zumindest teilweise auf einer Teilmenge der Mehrzahl von Medieninhaltselementen (431 - 433) basiert, wobei die Teilmenge zumindest teilweise auf einer Backhaul-Bandbreitenverfügbarkeit des Zugangsknotens (410) basiert; und
Übertragen des verarbeiteten Medieninhalts an einen Server (470).

15. Computerprogramm, das Anweisungen aufweist, um zumindest einen Computer zu veranlassen, die Schritte gemäß einem der Ansprüche 1-13 auszuführen.

## Revendications

1. Procédé mis en oeuvre par un noeud d'accès (410) qui assure un accès réseau à un ou plusieurs dispositifs clients, le procédé comprenant :
la réception, au niveau du noeud d'accès (410), d'une pluralité d'éléments de contenu multimédia (431-433) à partir de l'un ou plusieurs dispositifs clients (401-403) ;
la génération au niveau du noeud d'accès (410) d'un contenu multimédia traité, dans lequel le contenu multimédia traité est basé au moins en partie sur un sous-ensemble de la pluralité d'éléments de contenu multimédia (431-433), le sous-ensemble sélectionné étant basé au moins en partie sur une disponibilité de bande passante de backhaul (410) ; et
la transmission du contenu multimédia traité à un serveur (470).

2. Procédé selon la revendication 1, comprenant en outre :
la détermination de caractéristiques de la pluralité d'éléments de contenu multimédia (431-433) au niveau du noeud d'accès (410), dans lequel ladite génération est basée en outre au moins en partie sur les caractéristiques de la pluralité d'éléments de contenu multimédia (431-433).

3. Procédé selon la revendication 1, dans lequel la génération du contenu multimédia traité comprend :
la modification d'au moins un premier élément de contenu multimédia au niveau du noeud d'accès (410) en utilisant au moins un processus d'amélioration d'image ou d'audio.

4. Procédé selon la revendication 1, dans lequel la génération du contenu multimédia traité comprend le rejet, au niveau du noeud d'accès (410), d'un premier élément de contenu multimédia parmi la pluralité d'éléments de contenu multimédia si le premier élément de contenu multimédia est incomplet ou corrompu.

5. Procédé selon la revendication 1, dans lequel la génération du contenu multimédia traité comprend :
la détermination d'une première métrique de qualité associée à un premier élément de contenu multimédia (461, 462) ; et
le rejet du premier élément de contenu multimédia (461, 462) si la première métrique de qualité est au-dessous d'un seuil (460), dans lequel
le contenu multimédia traité comprend des éléments de contenu multimédia (441-444, 451,452) qui ont des métriques de qualité au-dessus du seuil (460).

6. Procédé selon la revendication 1, dans lequel la génération du contenu multimédia traité comprend :
la détermination que deux éléments de contenu multimédia (441-444, 452) ont un contenu redondant, dans lequel le contenu redondant est un contenu identique, dupliqué et/ou chevauchant dans les deux éléments de contenu multimédia (441-444, 452) ; et
le rejet d'un des deux éléments de contenu multimédia (441-444, 452) qui ont le contenu redondant.

7. Procédé selon la revendication 6, dans lequel la détermination que les deux éléments de contenu multimédia (441-444, 452) ont le contenu redondant comprend la détermination qu'au moins une portion d'image correspondante est trouvée dans les deux éléments de contenu multimédia.

8. Procédé selon la revendication 1, la génération du contenu multimédia traité comprend :
le fait de déterminer si un premier élément de contenu multimédia comprend une vue panoramique ; et
le rejet du premier élément de contenu multimédia sur la base au moins en partie de réglages de filtre panoramique et si le premier élément de contenu multimédia comprend la vue panoramique.

9. Procédé selon la revendication 1, dans lequel la génération du contenu multimédia traité comprend
la préparation, au niveau du noeud d'accès (510), d'un élément de contenu de compilation (530) qui est basé au moins en partie sur le sous-ensemble de la pluralité d'éléments de contenu multimédia (441-444) et l'inclusion de l'élément de contenu de compilation (530) dans le contenu multimédia traité.

10. Procédé selon la revendication 1, dans lequel la transmission du contenu multimédia traité comprend :
le téléchargement du contenu multimédia traité à un site web de réseau social ; et
le partage du contenu multimédia traité par le biais du site web de réseau social pour le compte d'un utilisateur.

11. Procédé selon la revendication 1, dans lequel la transmission du contenu multimédia traité comprend :
le partage du contenu multimédia traité pour le compte d'un utilisateur.

12. Procédé selon la revendication 1, comprenant en outre :
la transmission du contenu multimédia traité à un deuxième serveur.

13. Procédé selon la revendication 1, dans lequel la réception de la pluralité d'éléments de contenu multimédia (431-433) comprend l'interception de messages adressés par l'un ou plusieurs dispositifs clients (401-403) au serveur (470) par le biais du noeud d'accès (410).

14. Noeud d'accès (410) d'un réseau, le noeud d'accès (410) comprenant :
un processeur (702) ; et
une mémoire (706) pour stocker des instructions qui, quand elles sont exécutées par le processeur (702), amènent le noeud d'accès (410) à :
recevoir une pluralité d'éléments de contenu multimédia (431-433) à partir d'un ou plusieurs dispositifs clients (401-403) ;
générer au niveau du noeud d'accès (410) un contenu multimédia traité, dans lequel le contenu multimédia traité est basé au moins en partie sur un sous-ensemble de la pluralité d'éléments de contenu multimédia (431-433), le sous-ensemble sélectionné étant basé au moins en partie sur une disponibilité de bande passante de backhaul (410) ; et
transmettre le contenu multimédia traité à un serveur (470).

15. Programme informatique comprenant des instructions pour amener au moins un ordinateur à effectuer les étapes selon l'une des revendications 1 à 13.
